# EUROPÄISCHE PATENTSCHRIFT

(11) **EP 0 614 160 B1**
(45) Veröffentlichungstag und Bekanntmachung des Hinweises auf die Patenterteilung: **27.10.1999**
(21) Anmeldenummer: 94102786.4
(22) Anmeldetag: 24.02.1994
(51) Int. Cl.: G06K 19/07

(54) **Tragbares Sprachmodul**
Portable voice module
Module portable de parole

(30) Priorität: 27.02.1993 DE 4306199; 27.02.1993 DE 4306200
(43) Veröffentlichungstag der Anmeldung: 07.09.1994
(73) Patentinhaber: ALCATEL, 75008 Paris (FR)
(72) Erfinder: Kopp, Dieter, D-71282 Hemmingen (DE); Dvorak, Susane, D-71679 Asperg (DE); Hörmann, Thomas, D-71723 Grossbottwar (DE)
(74) Vertreter: Knecht, Ulrich Karl, Dipl.-Ing.

(56) Entgegenhaltungen:
- EP-A- 0 276 403
- EP-A- 0 277 276
- WO-A-92/20048
- DE-A- 3 608 497
- US-A- 4 851 654
- TELECOMMUNICATIONS - ASIA, AMERICAS, PACIFIC: PTC '86 PROCEEDINGS, 1986, HONOLULU Seiten 166 - 175 G.J. LISSANDRELLO 'Chip cards (memocards) and telecommunications'
- IEEE COMMUNICATIONS MAGAZINE, Bd.27, Nr.7, Juli 1989, NEW-YORK Seiten 41 - 48, XP000038828 NAOKI MATSUO, KATSUNORI SHIMOHARA, HIROYUKI MATSUI, YUKIO TOKUNAGA 'personal telephone services...

## Beschreibung

Die Erfindung betrifft eine aus einem tragbaren Sprachmodul und einem Fernsprechapparat bestehende Fernsprecheinrichtung sowie ein einsteckbares, tragbares Sprachmodul.

Bereits aus dem Bereich der Telekommunikation ist die Bedienung von Geräten, hier Telekommunikationsendgeräten, mittels einer tragbaren Komponente bekannt. Dazu werden Chipkarten die auch unter dem Namen Smart-Card oder Memokarten (Memocard) bekannt sind verwendet.

Weitere bekannte Ausführungsformen von Karten zur Bedienung eines Telekommunikationsendgerätes sind Magnetstreifenkarten, Hologrammkarte und Laserkarte. Desweiteren sind auch dem Stand der Technik noch Memorykarten bekannt, die lediglich aus Speicherbausteinen mit nicht flüchtigem Speicher zusammengesetzt sind, aber über keine eingebaute Intelligenz verfügen. ("Chip Cards (Memocards) and Telecommunications"; George J. Lissandrello; Pacific Telecommunications Council; Honolulu, USA, 1986; Seiten 166 bis 175).

Im Unterschied zu diesen drei Kartentypen besitzt die Chipkarte (Smart-Card) eine eingebaute "Intelligenz" mit der Rechenoperationen durchgeführt und Zugriffe auf den Speicher in der Karte kontrolliert werden können. Diese Chipkarten werden eingesetzt als "elektronisches Geld", als "elektronischer Schlüssel" oder als "tragbarer Informationsspeicher". Hierbei können beispielsweise häufig gewählte Telefonnummern auf die Chipkarte gespeichert werden und an öffentlichen Telefonen unter dem Leistungsmerkmal "Kurzwahl" abgerufen werden. ("Chipkarten; Karten mit "Gedächtnis" "; Eberhard Schröther; Funkschau 7/1988; S. 50 - 52).

Weitere Verwendungen finden Chipkarten zur "geschützten Speicherung von Daten", als "Datenverschlüsselung in der Karte (end to end enclyption)", als "gegenseitige Authentifizierung von Karten und Terminal", als "elektronische Unterschrift" und als "ldentitätsprüfung in der Karte" ("Die Chipkarte in modernen Kommunikationssystemen"; Wolfgang Effing, ITG Fachbericht; Vol. 101; p 451 bis 464).

Ein weiteres Anwendungsgebiet von tragbaren Komponenten zur Bedienung von Geräten liegt in dem Gebiet der Datenverarbeitung und der Datenkommunikation. Bei Druckern, z.B. Laserdruckern, werden sogenannte lC-Karten zur Erweiterung des aktiven Zeichensatzes verwendet (Kyocera Laserdrucker, F 2200, Japan). Bei der Wahl eines Zeichensatzes der sich nicht im Festspeicher des Druckers, sondern auf der IC-Karte, dem zusätzlichen Speicher, befindet, wird der Zeichensatz der IC-Karte zum Drucken aktiviert.

Aus dem Artikel "Personal Telephone Services Using IC-Cards" von N. Matsuo et al., IEEE Communications Magazine, Bd.27, Nr.7, Juli 1989, New York, Seiten 41 bis 48, ist bekannt, Gerätefunktionen eines Telefones mittels der CPU einer eingesteckten IC-Karte zu überwachen und die Gerätefunktionen selbst mittels der IC-Karte zu ändern oder bereitzustellen.

Die US Patentschrift 4,851,654 offenbart ein Sprachmodul zur Zugangskontrolle eines Benutzers zu einer Vorrichtung, beispielsweise zu einer Tür oder einem Fahrstuhl, das über eine Funkverbindung die Vorrichtung steuert. Dazu hält der Benutzer das Sprachmodul in der Hand oder trägt es an seiner Kleidung und spricht Steuerbefehle hinein. In dem Sprachmodul wird eine Spracherkennung durchgeführt und ein dem gesprochenen Steuerbefehl entsprechendes Steuersignal wird über eine Funkverbindung an die zu steuernde Vorrichtung übertragen um diese mittels Sprache fernzusteuern. Alternativ lehrt die Patentschrift, daß die Karte auch mittels einer I/O-Schnittstelle mit der zu steuernden Vorrichtung unter Verzicht auf eine Funkübertragung verbunden werden kann, daß aber in diesem Falle zunächst Befehle auf die Karte gesprochen und dort zwischengespeichert werden müssen, bevor die Karte zur Ausführung der Befehle in die Vorrichtung gesteckt werden kann.

Aus DE-A-3 608 497 ist ein sprachgesteuertes Fernmelde gerät bekannt, bei dem die sprachsteuerung fest eingebaut ist.

Der Erfindung liegt die Aufgabe zugrunde eine Bedienung und Steuerung einer Fernsprecheinrichtung mittels einer tragbaren Komponente zu entwickeln. Im speziellen besteht die Aufgabe, eine sprachgesteuerte Bedienung der Fernsprecheinrichtung zu entwickeln.

Diese Aufgabe wird erfindungsgemäß gelöst durch die Lehre des ersten Patentanspruchs und durch die Lehre des sechsten Patentanspruchs.

Ein Vorteil der Erfindung liegt darin, daß die gesprochene Sprache direkt aufgezeichnet wird, wodurch z.B. wichtige Aussagen im Speicher gespeichert werden und zu einem späteren Zeitpunkt jederzeit wieder aufrufbar sind. Es ist nicht mehr nötig, Eingaben z.B. mittels einer Tastatur zu machen. Dadurch können Sprache oder Daten in Form von Sprache, ohne Benutzung der Hände, aufgenommen werden. Desweiteren kann mittels des tragbaren Sprachmoduls Sprache auf sehr einfache Weise aufgezeichnet werden.

Ein weiterer Vorteil des tragbaren Sprachmoduls ist, daß Bedienungs- oder Steuerbefehle für die Fernsprecheinrichtung immer in der selbst gewählten Sprache, z.B. der Muttersprache erfolgen können. Befindet sich ein Benutzer des tragbaren Sprachmoduls beispielsweise im Ausland, so kann er einen Steuerbefehl in seiner Muttersprache eingeben, und der Befehl wird, unabhängig von der dort gesprochenen Sprache richtig ausgeführt. Somit ist ein fest definierter Satz von Steuer- und Bedienungsbefehlen immer verfügbar.

Ein Vorteil der Erfindung bei der Verwendung für eine Fernsprecheinrichtung liegt darin, daß durch die Verwendung des tragbaren Sprachmoduls auf dem sich Softwareprogramme zur Ausführung von Leistungsmerkmalen befinden, die Leistungsmerkmale benutzerspezifisch programmiert werden können und unabhängig vom Ort in dem sich der Benutzer gerade befindet, angewendet werden können, somit also immer und an jedem Ort verfügbar sind.

Desweiteren müssen bei dieser Fernsprecheinrichtung die Fernsprechapparate lediglich aus ihren Basiskomponenten bestehen. Unter Basiskomponenten des Fernsprechapparates werden in dem vorliegenden Fall Komponenten verstanden, die unbedingt vorhanden sein müssen, um wenigstens das Telefonieren ohne Zusatzbestandteile zu ermöglichen. Das Zusammensetzen aus Basiskomponenten hat wiederum den Vorteil, daß die Apparate preisgünstig sind, dennoch alle Leistungsmerkmale zur Verfügung stellen können, falls diese über das eingesteckte tragbare Sprachmodul bereitgestellt und aktiviert werden. Ebenso ist die gewählte Art des Fernsprechapparates nicht beschränkt, denn jeder beliebige Fernsprechapparat kann, falls er eine Schnittstelle zum Einstecken des tragbaren Sprachmodul besitzt, benutzt werden.

Vorteilhafte Weiterentwicklungen der Erfindung und deren Verwendung sind den Unteransprüchen 2 bis 5 und 7 zu entnehmen.

Nach Unteranspruch 2 kann mit dem tragbaren Sprachmodul Sprache aufgezeichnet und wiedergegeben werden. So kann an einem ersten Ort die Sprache aufgezeichnet werden und an einem zweiten Ort zur Auswertung wiedergegeben werden.

Desweiteren können mittels dieses tragbaren Sprachmoduls Bilddaten aufgezeichnet und wiedergegeben werden. Hierzu werden Bilddaten über die digitale Schnittstelle DIGITAL I/O auf das tragbare Sprachmodul gegeben oder über die digitale Schnittstelle DIGITAL I/O ausgegeben.

Nach Unteranspruch 3 bis 5 werden besonders vorteilhafte Ausgestaltungen der Fernsprecheinrichtung unter Verwendung einer tragbaren Komponente erläutert. Nach Unteranspruch 7 ist das tragbare Sprachmodul in Scheckkartenformat ausgebildet.

Ein Ausführungsbeispiel der Erfindung wird anhand der Figuren erläutert. Folgende Figuren zeigen:
- Fig. 1: ein Blockschaltbild des tragbaren Sprachmoduls,
- Fig. 2: ein Flußdiagramm eines Anwendungsbeispiels und
- Fig. 3: ein Blockschaltbild des Sprachmoduls der Fernsprecheinrichtung.

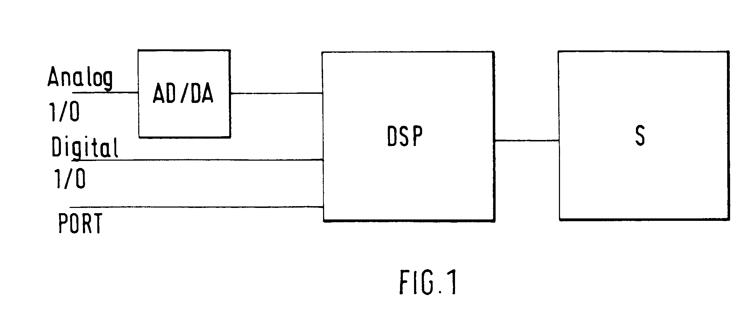

Im folgenden Teil wird das tragbare Sprachmodul anhand von Fig. 1 erläutert.

Das tragbare Sprachmodul besteht aus einem digitalen Signalprozessor DSP, der mit einem Speicher S verbunden ist. Ebenso ist der digitale Signalprozessor DSP mit einer digitalen Schnittstelle DIGITAL I/O und über eine Analog-Digital/Digital-Analog-Wandler AD/DA mit einer analogen Schnittstelle ANALOG I/O verbunden. Der digitale Signalprozessor DSP ist ebenfalls mit einer Rechnerschnittstelle PORT verbunden.

Über die analoge Schnittstelle ANALOG I/O ist eine Sprachein- und ausgabe, also eine Audioein- und ausgabe möglich. Für den Fall der Spracheingabe wird ein analoges Signal mittels des Analog-Digital/Digital-Analog-Wandler AD/DA in ein digitales Signal umgewandelt und weiter an den digitalen Signalprozessor DSP gegeben. Für den Fall der Sprachausgabe wird ein digitales Signal von dem digitalen Signalprozessor DSP aus auf den Analog-Digital/Digital-Analog-Wandler AD/DA gegben und in ein analoges Signal - ein Audiosignal - umgewandelt und auf die analoge Schnittstelle ANALOG I/O gegeben.

Über die digitale Schnittstelle DIGITAL I/O können digitale Signale ein- und ausgegeben werden. Die Ausgabe dient zum Lesen von digitalen Signalen oder Daten des Sprachmoduls und die Eingabe zum Beschreiben mit digitalen Signalen oder Daten des Sprachmoduls. Die digitalen Daten können z.B. Sprachdaten sein. Desweiteren können aber auch Bilddaten aufgenommen und ausgegeben werden.

Die digitale Schnittstelle DIGITAL I/O kann ebenfalls zur Steuerung von Geräten verwendet werden.

Die Rechnerschnittstelle PORT dient zur Steuerung von Geräten. Desweiteren ist die Aufnahme und Ausgabe von Daten über die Rechnerschnittstelle PORT möglich.

In dem Speicher S sind Softwareprogramme zur Spracherkennung, zur Sprachcodierung und zur Sprachsynthese gespeichert. Die Softwareprogramme zur Sprachcodierung und zur Spracherkennung werden z.B. durch das Einführen des Sprachmoduls in ein Gerät mit einer Schnittstelle aktiviert.

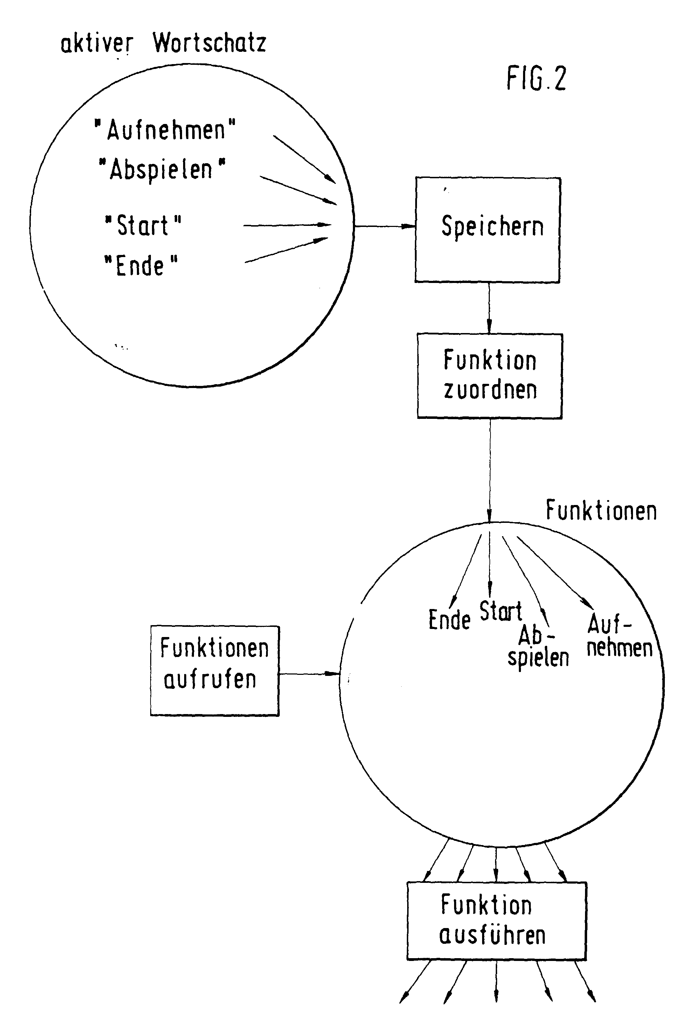

Die Softwareprogramme zur Spracherkennung dienen zur Bedienung und Steuerung der Geräte, wie anhand des Ausführungsbeispiels nach Fig. 2 später noch erklärt wird.

Die Softwareprogramme zur Sprachcodierung dienen zur Aufzeichnung und zur Wiedergbe von Sprache. Die Sprache wird bevor sie in dem Speicher S abgelegt wird, codiert und ebenso wird die so codierte Sprache, die in Form von Sprachdaten vorliegt, wieder in uncodierte Sprache umgesetzt.

Die Softwareprogramme zur Sprachsynthese dienen zur Benutzerführung. Mittels der Sprachsynthese wird codierte Sprache, die im Speicher gespeichert ist, wieder in uncodierte Sprache umgewandelt. Die uncodierte Sprache wird über die analoge Schnittstelle ANALOG I/O ausgegeben und dient einem Benutzer des tragbaren Sprachmoduls zur Benutzerführung.

Im folgenden Teil wird ein Ausführungsbeispiel anhand von Fig. 2 erläutert.

Auf dem tragbaren Sprachmodul werden z.B. in der Muttersprache eines Benutzers die Worte "Aufnehmen", "Abspielen", "Starten" und "Ende" gespeichert. Die gespeicherten Worte stellen die ausführbaren Steuer- und Bedienungsbefehle, also den 'aktiven Wortschatz' des tragbaren Sprachmoduls dar.

Den einzelnen Worten wird eine entsprechende Funktion zugeordnet. So wird z.B. dem Wort "Aufnehmen" als Funktion zugeordnet, daß gesprochene Sprache über die analoge Schnittstelle I/O aufgenommen wird, in codierte Sprache umgewandelt wird und in dem Speicher S als codierte Sprache in Form von Sprachdaten gespeichert wird.

Für das Wort "Wiedergabe" gilt eine entsprechende Funktion, aber in umgekehrter Richtung.

Dem Wort "Start" des aktiven Wortschatzes wird die Funktion des Startens eines beliebigen Gerätes zugeordnet. An der digitalen Schnittstelle DIGITAL I/O ist das Gerät angeschlossen, welches zur Funktion des Startens angewiesen wird. Entsprechendes gilt für eine durch das Wort "Ende" ausgelöste Funktion in entgegengesetzter Richtung.

Ein Benutzer des tragbaren Sprachmoduls kann dieses in einem Gerät mit akustischer Eingabevorrichtung, z.B. einem Telekommunikationsendgerät oder einer Fernsprecheinrichtung, verwenden.

Durch die akustische Aufforderung "Aufnehmen" wird die daraufhin gesprochene Sprache aufgezeichnet. So kann der Benutzer, z.B. ein Mediziner der an einem Krankenbett sitzt, parallel zu der Untersuchung ohne fremde Hilfe und ohne die Hände von einem Patienten nehmen zu müssen, Diagnosedaten oder -ergebnisse mittels Sprache aufnehmen und abspeichern.

Auch hier kann eine Auswertung wieder zu einem anderen Zeitpunkt und an einem anderen Ort erfolgen. Durch die akustische Aufforderung "Abspielen" wiederholt das tragbare Sprachmodul wieder die zuvor aufgenommene und gespeicherte gesprochene Sprache.

Der 'aktive Wortschatz' kann beliebig erweitert werden. Ebenso können Worte aus dem aktiven Wortschatz gelöscht werden oder durch andere Worte ersetzt werden.

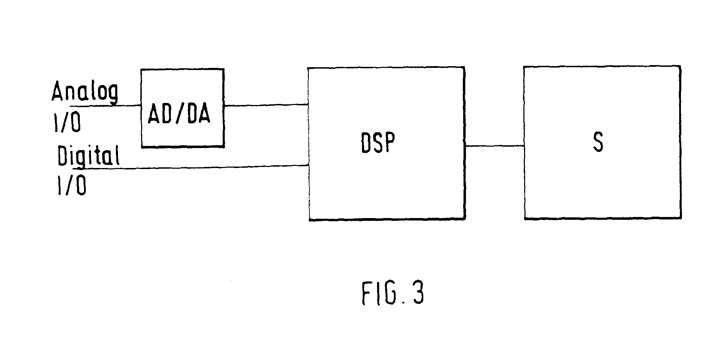

Die erfindungsgemäße Fernsprecheinrichtung nach Anspruch 1 besteht aus einem tragbaren Sprachmodul, wie in der Figur 3 gezeigt und aus einem Fernsprechapparat mit einer Schnittstelle zum Einstecken des tragbaren Sprachmoduls (ohne Zeichnung). Das Sprachmodul dient zur sprachgesteuerten Bedienung der Fernsprecheinrichtung.

Dieses tragbare Sprachmodul besteht ebenfalls aus einem digitalen Signalprozessor DSP, der mit einem Speicher S verbunden ist. Ebenso ist der digitale Signalprozessor DSP mit einer digitalen Schnittstelle DIGITAL I/O und über einen Analog-Digital/Digital-Analog-Wandler AD/DA mit einer analogen Schnittstelle ANALOG I/O verbunden.

In dem Speicher S sind Softwareprogramme zur Sprachcodierung, zur Spracherkennung und Softwareprogramme von Leistungsmerkmalen gespeichert. Die Softwareprogramme zur Sprachcodierung und zur Spracherkennung werden durch das Einstecken des Sprachmoduls in den Fernsprechapparat aktiviert. Die Softwareprogramme von Leistungsmerkmalen sind mittels Sprache jederzeit abrufbar. Auf dem noch verbleibenden freien Speicherplatz in dem Speicher S können neue Softwareprogramme überspielt und abgespeichert werden.

Zu den gespeicherten Softwareprogrammen können beispielsweise Softwareprogramme zur Codierung von Sprache für Benutzerführung, zur Sprachspeicherung, zur Notizbuchfunktion und zur Wiedergabe von Sprache für Anrufbeantworterfunktion, zum Freisprechen und für weitere sprachgesteuerte Bedienungsfunktionen zählen. Die Spracherkennung kann hier sprecherunabhängig oder sprecherabhängig vorgenommen werden. Unter Codierung von Sprache für Benutzerführung wird hier die sprachgesteuerte Hilfe während der Benutzung der Fernsprecheinrichtung verstanden. Mittels gesprochener Sprache werden einem Benutzer Hilfestellungen bei der Benutzung der Fernsprecheinrichtung gegeben. So wird zum Beispiel einem Benutzer mittels Sprache mitgeteilt, welchen weiterführenden Befehl er einsprechen muß, um eine gewünschte Funktion auszuführen.

Bei der Sprachspeicherung zur Notizbuchfunktion wird die gesprochene Sprache eines Benutzers aufgezeichnet und gespeichert und befindet sich jederzeit abrufbar in dem Speicher S. Somit ist ein Benutzer in der Lage gesprochene Notizen aufzuzeichnen, sie mit sich zu führen um sie jederzeit zu erweitern, oder um sie auszuwerten.

Bei der Wiedergabe von Sprache für Anrufbeantworterfunktion wird ein auf dem Sprachmodul aufgezeichneter Text aufgerufen und abgespielt. Somit führt ein Benutzer den Text überall mit sich, und bei zusätzlich möglicher Sprachspeicherung kann ein Text eines Anrufenden gespeichert werden.

Die Software zum Freisprechen wird ebenfalls auf dem tragbaren Sprachmodul gespeichert. Dies ermöglicht eine Vereinheitlichung der Software unabhängig vom Typ des benutzten Fernsprechapparates, d.h. unabhängig ob es ein analoger oder ein digitaler Fernsprechapparat ist.

Für diesen Fall ist ebenfalls über die analoge Schnittstelle ANALOG I/O eine Sprachein- und ausgabe, also eine Audioein- und ausgabe möglich. Für den Fall der Spracheingabe wird ein analoges Signal mittels des Analog-Digital/Digital-Analog-Wandler AD/DA in ein digitales Signal umgewandelt und weiter an den digitalen Signalprozessor DSP gegeben. Für den Fall der Sprachausgabe wird ein digitales Signal von dem digitalen Signalprozessor DSP aus auf den Analog-Digital/Digital-Analog AD/DA gegeben und in ein analoges Signal - ein Audiosignal - umgewandelt und auf die analoge Schnittstelle ANALOG I/O gegeben.

Über die digitale Schnittstelle DIGITAL I/O können digitale Signale ein- und ausgegeben werden. Die Ausgabe dient zum Lesen von digitalen Signalen oder Daten des Sprachmoduls und die Eingabe zum Beschreiben mit digitalen Signalen oder Daten des Sprachmoduls. Die digitalen Daten können z.B. Sprachdaten sein. Ebenso ist es möglich, Bilddaten über die digitale Schnittstelle ein- und auszugeben.

Neben dem tragbaren Sprachmodul besteht die erfindungsgemäße Fernsprecheinrichtung aus einem Fernsprechapparat (ohne Zeichnung). Der Fernsprechapparat wiederum besteht aus Basiskomponenten eines sogenannten Primitivtelefons. Zu den Basiskomponenten zählen beispielsweise eine Tastatur, ein Lautsprecher und ein Mikrofon. Eine Leitungsschnittstelle und eine Schnittstelle zum Einstecken des tragbaren Sprachmoduls müssen ebenfalls vorhanden sein. Die Schnittstelle für das Sprachmodul dient zur Aufnahme und zum Anschließen des tragbaren Sprachmoduls an den Fernsprechapparat und für den Fall, daß kein Sprachmodul eingesteckt wird, bleibt eine Grundbetriebsfunktion und zwar die Funktion des Telefonierens, z.B. für eine Notfallnummer, erhalten. Dies ist notwendig, um zu jedem Zeitpunkt und für jeden möglichen Benutzer bereitzustellen, daß unabhängig von einem eingesteckten Sprachmodul telefoniert werden kann.

Die Leitungsschnittstelle kann entweder für den Anschluß eines digitalen Telefonapparates oder für den Anschluß eines analogen Telefonapparates ausgelegt sein.

Das Zusammenwirken der beiden Komponenten der Fernsprecheinrichtung, Sprachmodul und Fernsprechapparat, läßt sich folgendermaßen beschreiben:
Einem tragbaren Sprachmodul werden Softwareprogramme für Leistungsmerkmale in den Speicher S programmiert. Die Anzahl der Leistungsmerkmale und die Art der Leistungsmerkmale die sich auf dem Sprachmodul befinden, ist beliebig wählbar und ist nur im Maximum durch die Größe des Speichers S begrenzt. Außerdem kann jederzeit ein neues Softwareprogramm für ein neues Leistungsmerkmal oder für ein verbessertes Leistungsmerkmal programmiert, überspielt und in dem Speicher S gespeichert werden.

Ein Benutzer des tragbaren Sprachmoduls führt somit die von ihm gewünschten Leistungsmerkmale, z.B. in der Ausführungsform einer Scheckkarte, mit sich und ist unabhängig von Zeit und vom Ort, an dem er sich gerade befindet, in der Lage diese Leistungsmerkmale zu benutzen.

An den benutzten Fernsprechapparat wird nur die Forderung gestellt Basiskomponenten aufzuweisen, mit Hilfe derer und mit Hilfe des eingesteckten, tragbaren Sprachmoduls ein sogenanntes Primitivtelefon zu einem Fernsprechapparat mit allen gewünschten Leistungsmerkmalen umfunktioniert werden kann. Dabei kann der Fernsprechapparat ein beliebiger öffentlicher Fernsprechapparat oder ein privater Fernsprechapparat oder ein mobiler Fernsprechapparat oder aber eine Datenverarbeitungsanlage mit Telefonbetriebsfunktion sein, also eine Datenverarbeitungsanlage mittels derer ebenfalls ein Fernsprechbetrieb möglich ist.

Daraus ergibt sich die Möglichkeit, mittels des tragbaren Sprachmoduls jeden Fernsprechapparatetyp zu verwenden. Neben der Tatsache, daß die gewünschten Leistungsmerkmale oder Funktionen jederzeit und an jedem Ort zur Verfügung stehen, ist auch noch jeder beliebige Fernsprechapparat umfunktionierbar.

Die Verwendung eines tragbaren Sprachmoduls wird anhand des folgenden Beispiels erläutert.

Ein Fernsprechteilnehmer besitzt ein tragbares Sprachmodul. Auf dem Sprachmodul sind individuell von dem Teilnehmer gewünschte Softwareprogramme für Leistungsmerkmale gespeichert. Desweiteren befinden sich an jedem möglichen Aufenthaltsort des Teilnehmers Fernsprechapparate, die sich aus ihren Basiskomponenten zusammensetzen. Somit ist der Teilnehmer in der Lage, an jedem Ort eine sprachgesteuerte Bedienung eines Fernsprechapparates vorzunehmen.

Für den Fall, daß sich der Teilnehmer z.B. im andersprachigen Ausland befindet, kann er mittels des tragbaren Sprachmoduls trotzdem eine sprachgesteuerte Bedienung einer Fernsprecheinrichtung in seiner Muttersprache vornehmen, denn die gesprochenen Bedienungsanweisungen werden auf das Sprachmodul gegeben, dort findet eine Spracherkennung statt, und so erkannte Befehle werden in Funktionsanweisungen umgewandelt.

Desweiteren kann sich der Fernsprechteilnehmer für den Fall, daß er z.B. in einem Personenkraftwagen unterwegs ist und er sein Sprachmodul in dem darin befindlichen Mobiltelefon eingesteckt hat, die Bedienung des Telefons sprachgesteuert vornehmen ohne die Hände vom Lenkrad nehmen zu müssen. So wird z.B. eine von dem Teilnehmer gesprochene Bedienungsanweisung "Wähle Maier, Josefa" von dem tragbaren Sprachmodul als Bedienungsanweisung erkannt, und dann in die Funktion des Wählens der Telefonnummer der Josefa Maier umgesetzt.

Dieses tragbare Sprachmodul kann ebenfalls in Form einer Scheckkarte ausgebildet werden.

Der Fernsprechapparat kann eine Datenverarbeitungsanlage mit Telefonbetriebsfunktion sein. In die Datenverarbeitungsanlage wird das tragbare Sprachmodul, beispielsweise in Scheckkartenformat, eingesteckt, die Datenverarbeitungsanlage baut eine Fernsprechverbindung auf und somit ist ein Telefonbetrieb möglich.

## Patentansprüche

1. Fernsprecheinrichtung bestehend aus
- einem tragbaren Sprachmodul zur sprachgesteuerten Bedienung der Fernsprecheinrichtung mit einem digitalen Signalprozessor (DSP), mit einem Analog-Digital/Digital-Analog-Wandler (AD/DA), mit einer analogen Schnittstelle (ANALOG I/O) für Spracheingabe, mit einer digitalen Schnittstelle (DIGITAL I/O) und mit einem Speicher (S), in dem Softwareprogramme von Leistungsmerkmalen und Softwareprogramme zur Sprachcodierung und Spracherkennung abgespeichert sind, wobei der digitale Signalprozessor (DSP) sowohl mit dem Speicher (S), als auch mit der digitalen Schnittstelle (DIGITAL I/O), als auch über den Analog-Digital/Digital-Analog-Wandler (AD/DA) mit der analogen Schnittstelle (ANALOG I/O) verbunden ist, und
- einem Fernsprechapparat mit einer Schnittstelle zum Einstecken des tragbaren Sprachmoduls und mit einem Mikrophon zur Spracheingabe, wobei analoge Sprachsignale bei eingestecktem Sprachmodul der analogen Schnittstelle des Sprachmoduls zugeleitet werden.

2. Fernsprecheinrichtung nach Anspruch 1, bei der auf dem tragbaren Sprachmodul gesprochene Sprache gespeichert wird.

3. Fernsprecheinrichtung nach Anspruch 1 oder 2, bei der die auf dem Speicher des Sprachmoduls gespeicherten Softwareprogramme zur Wiedergabe von Sprache geeignet sind, und/oder zur Ausführung einer Freisprechfunktion geeignet sind.

4. Fernsprecheinrichtung nach einem der Ansprüche 1 bis 3, bei der die auf dem Speicher des Sprachmoduls gespeicherten Softwareprogramme zur Codierung von Sprache für Benutzerführung geeignet sind.

5. Fernsprecheinrichtung nach einem der Ansprüche 1 bis 4, bei der der Fernsprechapparat ein öffentlicher Fernsprechapparat oder ein privater Fernsprechapparat oder ein mobiler Fernsprechapparat oder eine Datenverarbeitungsanlage mit Telefonbetriebsfunktion ist.

6. Einsteckbares, tragbares Sprachmodul für eine Fernspreche inrichtung nach Anspruch 1, mit
- einem digitalen Signalprozessor (DSP),
- einem Analog-Digital/Digital-Analog-Wandler (AD/DA),
- einer analogen Schnittstelle (ANALOG I/O) für Spracheingabe analoger, über eine Mikrophon des Fernsprechapparates eingegebene Sprachsignale,
- einer digitalen Schnittstelle (DIGITAL I/O) und
- einem Speicher (S), in dem Softwareprogramme von Leistungsmerkmalen und Softwareprogramme zur Sprachcodierung und Spracherkennung abgespeichert sind,
wobei der digitale Signalprozessor (DSP) sowohl mit dem Speicher (S), als auch mit der digitalen Schnittstelle (DIGITAL I/O), als auch über den Analog-Digital/Digital-Analog-Wandler (AD/DA) mit der analogen Schnittstelle (ANALOG I/O) verbunden ist.

7. Tragbares Sprachmodul nach Anspruch 6, bei der das tragbare Sprachmodul in Scheckkartenformat ausgelegt ist.

## Claims

1. Telephone installation consisting of
- a portable voice module for the voice-controlled operation of the telephone installation with a digital signal processor (DSP), with an analog-digital/digital-analog converter (AD/DA), with an analog interface (ANALOG I/O) for voice input, with a digital interface (DIGITAL I/O) and with a memory (S) in which software programs of service features and software programs for voice encoding and voice recognition are stored, wherein the digital signal processor (DSP) is connected to the memory (S) as well as to the digital interface (DIGITAL I/O) and, through the analog-digital/digital-analog converter (AD/DA), to the analog interface (ANALOG I/O), and
- a telephone device with a plug-in interface for the portable voice module and with a microphone for voice input, wherein analog speech signals are fed to the analog interface of the voice module when the voice module is plugged in.

2. Telephone installation according to claim 1, in which spoken language is stored in the portable voice module.

3. Telephone installation according to claim 1 or 2, in which software programs stored in the voice module's memory are suitable for playing back speech and/or for performing a hands-free telephone function.

4. Telephone installation according to one of claims 1 to 3, in which the software programs stored in the voice module's memory are suitable for encoding voice for user guidance.

5. Telephone installation according to one of claims 1 to 4, in which the telephone device is a public telephone or a private telephone or a mobile telephone or a data processing device with telephone operating function.

6. Plug-in portable voice module for a telephone installation according to claim 1, with
- a digital signal processor (DSP),
- an analog-digital/digital-analog converter (AD/DA),
- an analog interface (ANALOG I/O) for voice input of analog voice signals input via a microphone of the telephone device,
- a digital interface (DIGITAL I/O) and
- a memory (S) in which software programs of service features and software programs for voice encoding and voice recognition are stored,
wherein the digital signal processor (DSP) is connected to the memory (S) as well as to the digital interface (DIGITAL I/O) and, through the analog-digital/digital-analog converter (AD/DA), to the analog interface (ANALOG I/O).

7. Portable voice module according to claim 6, in which the portable voice module is designed in the form of a cheque card.

## Revendications

1. Dispositif téléphonique, comprenant :
- un module de parole portable pour contrôler par commande vocale le dispositif téléphonique avec un processeur de signaux numériques (DSP), avec un convertisseur analogique-numérique/ numérique-analogique (AD/DA), avec une interface analogique (ANALOG I/O) pour l'entrée de la parole, avec une interface numérique (DIGITAL I/O) et avec une mémoire (S) dans laquelle des logiciels de caractéristiques de puissance et des logiciels pour le codage de la parole et la reconnaissance de la parole sont stockés, le processeur de signaux numériques (DSP) étant relié aussi bien à la mémoire (S) qu'à l'interface numérique (DIGITAL I/O) et aussi par le convertisseur analogique-numérique/ numérique-analogique (AD/DA) à l'interface analogique (ANALOG I/O), et
- un poste de téléphone avec une interface pour insérer le module de parole portable et avec un microphone pour l'entrée de la parole, des signaux vocaux analogiques étant amenés à l'interface analogique du module de parole lorsque le module de parole est inséré.

2. Dispositif téléphonique selon la revendication 1, dans lequel de la parole prononcée est enregistrée sur le module de parole portable.

3. Dispositif téléphonique selon la revendication 1 ou 2, dans lequel les logiciels stockés dans la mémoire du module de parole sont adaptés à la reproduction de la parole et/ou à l'exécution d'une fonction mains libres.

4. Dispositif téléphonique selon l'une quelconque des revendications 1 à 3, dans lequel les logiciels stockés dans la mémoire du module de parole sont adaptés pour le codage de la parole pour le guidage par l'utilisateur.

5. Dispositif téléphonique selon l'une quelconque des revendications 1 à 4, dans lequel le poste de téléphone est un poste de téléphone public ou un poste de téléphone privé ou un poste de téléphone mobile ou une installation de traitement de données avec une fonction de service téléphonique.

6. Module de parole portable, insérable, pour un dispositif selon la revendication 1, comprenant
- un processeur de signaux numériques (DSP),
- un convertisseur analogique-numérique/ numérique-analogique (AD/DA),
- une interface analogique (ANALOG I/O) pour entrer de la parole par des signaux vocaux entrés par l'intermédiaire d'un microphone du poste de téléphone,
- une interface numérique (DIGITAL I/O), et
- une mémoire (S), dans laquelle des logiciels de caractéristiques de puissance et des logiciels pour le codage de la parole et la reconnaissance de la parole sont stockés,
dans lequel le processeur de signaux numériques (DSP) est relié aussi bien à la mémoire (S), qu'à l'interface numérique (DIGITAL I/O), ainsi que par le convertisseur analogique-numérique/ numérique-analogique (AD/DA) à l'interface analogique (ANALOG I/O).

7. Module de parole portable selon la revendication 6, dans lequel le module de parole portable est disposé dans un format de carte bancaire.
